# FASCICULE DE BREVET EUROPEEN

(11) **EP 1 872 140 B1**
(45) Date de publication et mention de la délivrance du brevet: **25.01.2012**
(21) Numéro de dépôt: 06743677.4
(22) Date de dépôt: 11.04.2006
(51) Int. Cl.: G01N 35/02

(54) **SUPPORT DE RECIPIENTS DE REACTION A PLATEAUX PIVOTANTS, APPAREIL D'ANALYSE COMPRENANT UN TEL SUPPORT, ET PROCEDE D'ANALYSE CORRESPONDANT**
REAKTIONSGEFÄSSTRÄGER MIT SICH DREHENDEN PLATTEN, EINEN DERARTIGEN TRÄGER ENTHALTENDE ANALYSEVORRICHTUNG UND ENTSPRECHENDES ANALYSEVERFAHREN
REACTION VESSEL SUPPORT HAVING PIVOTING PLATES, AN ANALYZING DEVICE COMPRISING A SUPPORT OF THIS TYPE, AND CORRESPONDING ANALYSIS METHOD

(30) Priorité: 20.04.2005 FR 0503968
(43) Date de publication de la demande: 02.01.2008
(73) Titulaire: Bio-Rad Innovations, 92430 Marnes-La-Coquette (FR)
(72) Inventeur: FOURNIER, Laurent, F-78000 Versailles (FR); DE BASTIANI, Bruno, F-75017 Paris (FR)
(74) Mandataire: Colombet, Alain André
(86) Numéro de dépôt international: PCT/FR2006/000799
(87) Numéro de publication internationale: WO 2006/111634

(56) Documents cités:
- EP-A- 0 317 677
- WO-A-2004/003219
- US-A1- 2003 059 287
- US-A1- 2004 166 022

## Description

La présente invention concerne un support pour récipients de réaction, du type comprenant un châssis destiné à être monté dans un appareil d'analyse et un plateau de support destiné à recevoir le récipient, le plateau de support étant monté rotatif sur le châssis autour d'un axe.

De nombreuses analyses chimiques, biologiques ou biochimiques impliquent la mise en contact et l'incubation de composés ou réactifs chimiques, biologiques ou biochimiques, sous forme de liquide, avec un ou plusieurs échantillons. C'est ainsi que de nombreux dosages biologiques font intervenir la réaction d'échantillons de sérum, de plasma ou du sang, avec des préparations liquides d'enzymes (dosages ou essais d'enzymes, d'anticorps ou d'antigènes (dosages ou essais immunologiques), d'acides nucléiques (dosages ou essais par hybridation avec ou sans amplification nucléique), etc...

Ces dosages ou essais se font notamment dans des récipients de réaction dans lesquels sont mélangés les échantillons et les réactifs. Un tel récipient est par exemple du type plaque de microtitrage, comprenant une pluralité de cupules arrangées en matrice, c'est-à-dire réparties en colonnes et en lignes.

Le remplissage des cupules est effectué avantageusement de façon automatique, à l'aide d'un appareil d'analyse comprenant un dispositif de distribution de réactifs comprenant des pipettes adaptées pour déposer des échantillons et/ou des réactifs dans les cupules.

Le document US 2004/0094575 décrit un appareil d'analyse comprenant une série de pipettes alignées, portées par un mécanisme rotatif permettant de faire pivoter les pipettes d'un quart de tour autour d'un axe vertical, de façon à sélectivement aligner les pipettes suivant les lignes ou suivant les colonnes d'une plaque de microtitrage.

Un tel dispositif permet une distribution « matricielle » de réactifs dans les cupules, c'est-à-dire une distribution à deux dimensions, par exemple en remplissant les cupules ligne par ligne avec un premier réactif, et colonne par colonne avec un deuxième réactif. Une telle distribution matricielle est utile dans de nombreux essais ou dosages, par exemple des essais ou dosages de criblage de molécules médicamenteuses.

Néanmoins, cet appareil est complexe et coûteux.

Le document US 2003/0059287 divulgue un plateau de support de plaques de microtitrage monté rotatif sur un chariot, la rotation du plateau étant commandée par une courroie passant autour d'une poulie reliée à un servomoteur, d'une poulie de renvoi et d'un arbre de pivotement du plateau.

Un but de l'invention est de proposer un dispositif simple et de coût de fabrication faible, permettant le remplissage rapide d'un récipient de réaction.

A cet effet, l'invention propose un support du type précité, caractérisé en ce qu'il comprend au moins un organe de commande monté mobile sur le chassis et comprenant des moyens d'accouplement libérable avec un élément mobile d'actionnement d'un actionneur de l'appareil d'analyse déplaçable pour mettre en prise l'élément mobile d'actionnement avec l'organe de commande ou le dégager de l'organe de commande, de façon à permettre le déplacement de l'organe de commande à l'aide de l'actionneur, l'organe de commande et le plateau de support étant reliés entre eux par l'intermédiaire d'éléments mécaniques de transmission, de façon qu'un déplacement de l'organe de commande par l'actionneur est susceptible de provoquer une rotation du plateau de support autour de l'axe de rotation dans au moins un sens de rotation.

Selon d'autre mode de réalisation, le support comprend une ou plusieurs des caractéristiques suivantes, prise(s) isolément ou selon toutes les combinaisons techniquement possibles :
- les éléments mécaniques de transmission sont logés à l'intérieur du châssis.
- le plateau de support est mobile entre deux positions extrêmes décalées de 80°.
- il comprend des éléments de rappel adaptés pour rappeler le plateau de support vers une première position extrême lorsque le plateau de support se situe entre la première position extrême et une position intermédiaire déterminée entre les deux positions extrêmes, et rappeler le plateau de support vers la deuxième position extrême lorsque le plateau de support se situe entre la deuxième position extrême et la position intermédiaire.
- les éléments de rappel comprennent une pièce liée en déplacement au plateau de support, et un organe élastique de rappel s'étendant entre la pièce et une attache fixe du châssis, la pièce possédant une trajectoire passant par une position extrémale d'éloignement par rapport à l'attache lorsque le plateau de support est dans la position intermédiaire.
- le ou chaque organe de commande est monté coulissant sur le châssis, et en ce que les éléments de transmission comprennent un galet et un levier, l'un étant lié au ou à chaque organe de commande, et l'autre étant lié au plateau de support.
- il comprend un organe de commande permettant de déplacer le plateau de support dans un sens de rotation, et un autre organe de commande permettant de déplacer le plateau de support dans le sens de rotation opposé, les moyens d'accouplement libérable des organes de commandes étant adaptés pour être sélectivement mis en prise avec l'élément mobile d'actionnement d'un actionneur de l'appareil d'analyse.
- le plateau de support comprend des éléments d'identification permettant d'identifier l'orientation du plateau de support autour de son axe de rotation.

L'invention concerne également un appareil d'analyse comprenant une table, un dispositif de distribution comprenant une tête de distribution mobile par rapport à la table, et possédant une pluralité de pipettes alignées adaptées pour aspirer, retenir et/ou éjecter du liquide, caractérisé en ce qu'il comprend au moins un support de récipients de réaction tel que défini ci-dessus, le châssis étant adapté pour être monté sur la table de façon à permettre le remplissage d'un récipient de réaction porté par le support, et au moins un actionneur comprenant un élément mobile d'actionnement apte à être mis en prise avec les moyens d'accouplement libérable du ou de chaque organe de commande du support.

Selon d'autres modes de réalisation, l'appareil comprend une ou plusieurs des caractéristiques suivantes, prise(s) isolément ou selon toutes les combinaisons techniquement possibles :
- l'actionneur et le support comprennent des moyens d'accouplement libérable pour déplacer le support par rapport à la table.
- l'actionneur comprend des moyens de lecture de codes d'identification disposés sur un récipient de réaction.
- les éléments d'identification du plateau de support sont du même type que les codes d'identification de récipients de réaction destinés à être disposés sur le support.

L'invention concerne encore un procédé d'analyse d'échantillons répartis dans des cupules d'un récipient porté par le support, à l'aide d'un appareil d'analyse tel que défini ci-dessus, comprenant les étapes de :
- commander l'actionneur de façon qu'il agisse sur le ou un organe de commande du support pour placer le plateau de support dans une première position ;
- remplir les cupules à l'aide du dispositif de distribution ;
- commander l'actionneur de façon qu'il agisse sur le ou un organe de commande pour placer le plateau de support dans une deuxième position en le faisant pivoter de sensiblement 90° autour de l'axe de rotation du plateau par rapport au châssis ; et
- remplir au moins des cupules à l'aide du dispositif de distribution.

L'invention concerne encore un programme d'ordinateur enregistrable sur un support de données numériques ou dans un ordinateur, comprenant des étapes de logiciel permettant la mise en oeuvre du procédé tel que défini ci-dessus, lorsque le programme est mis en oeuvre sur un ordinateur.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'un appareil automatique d'analyse comprenant un support conforme à l'invention, muni de plateaux de support rotatifs ;
- les figures 2 et 3 sont des vues schématiques en perspective éclatée du support de la figure 1, suivant des angles de vue différents, illustrant un système de commande de la rotation des plateaux ;
- les figures 4 à 6 sont des vues schématiques de dessus du support des figures 2 et 3, illustrant le fonctionnement du système de commande ; et
- les figures 7 à 10 sont des vues schématiques de dessus de l'appareil de la figure 1, illustrant le fonctionnement de celui-ci.

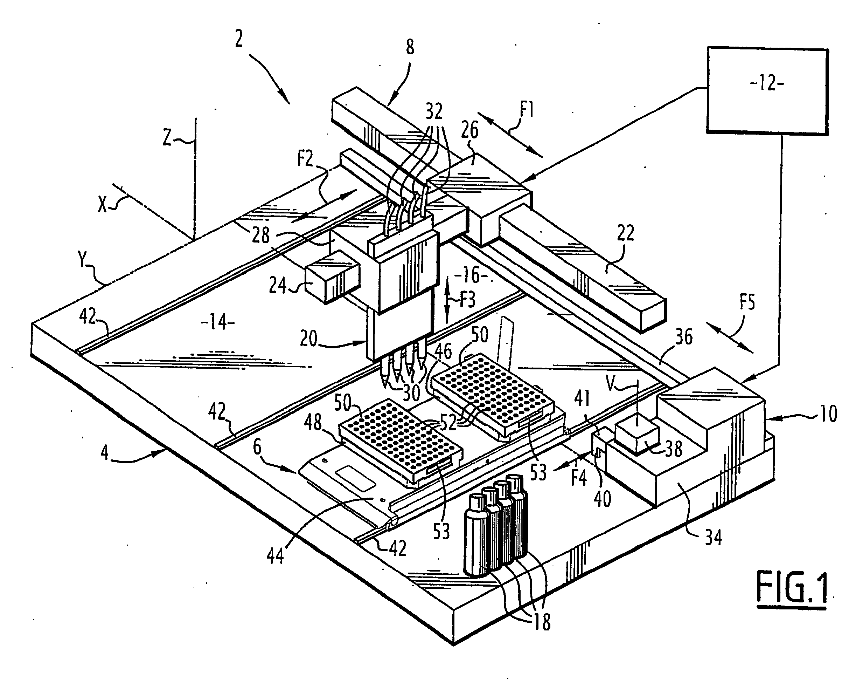

Tel que représenté sur la figure 1, l'appareil d'analyse 2 comprend une table 4 sensiblement horizontale, un support 6 de récipients de réaction, monté de façon amovible sur la table 4, un dispositif de distribution de liquide 8 permettant, de façon automatisée, de prélever des liquides en un endroit de la table 4 et de les distribuer en un autre endroit de la table 4, un actionneur 10 d'identification de récipients d'analyse disposés sur le support, monté mobile sur la table 4, et une unité de commande 12 du dispositif de distribution 8 et de l'actionneur 10.

La table 4 est rectangulaire et allongée selon une direction X sensiblement horizontale. La table 4 est séparée en deux zones adjacentes s'étendant selon la direction X (séparées symboliquement par un trait pointillé) : une zone de stockage 14, dans laquelle est reçu le support 6, et une zone de déplacement 16 dans laquelle se déplace l'actionneur 10.

Des récipients de réactifs 18 sont disposés sur la zone 14.

Le dispositif de distribution 8 comprend une tête de distribution 20 montée mobile en translation au-dessus de la zone 14, selon trois direction : la direction X, une direction Z sensiblement verticale, et une direction Y perpendiculaire aux directions X et Z.

Pour ce faire, le dispositif de distribution comprend une barre horizontale 22 fixe s'étendant selon la direction X, au-dessus de la zone 16, un bras horizontal 24 s'étendant selon la direction Y au-dessus de la zone 14, et possédant une portion d'extrémité 26 montée mobile en translation selon la direction X le long de la barre 22 (flèche F1), et un chariot 28 monté mobile en translation selon la direction Y le long du bras 24 (flèche F2). La tête 20 est montée mobile en translation sur le chariot 28 selon la direction Z (flèche F3).

La tête 20 porte plusieurs pipettes 30, par exemple quatre, alignées suivant la direction Y.

De façon connue en soi, chaque pipette 30 est adaptée pour sélectivement aspirer du liquide à l'intérieur de la pipette 30, retenir du liquide à l'intérieur de la pipette 30, et expulser du liquide préalablement retenu dans la pipette 30. En vue de sa commande indépendante, chaque pipette 30 est, par exemple, reliée à un circuit hydraulique de commande (non représenté) par l'intermédiaire d'une conduite 32.

De façon connue en soi, l'écartement selon la direction Y entre les pipettes 30 est réglable pour pouvoir aspirer ou distribuer du liquide simultanément dans plusieurs récipients avec des écartements différents.

L'actionneur 10 comprend une base 34 montée mobile en translation sur la zone 16, selon la direction X (flèche F5), le long d'un rail 36 fixé sur un bord de la table 4, et un lecteur optique 38 monté pivotant sur la base 34, autour d'un axe V parallèle à la direction Z, et un doigt de traction 40 solidaire d'une navette 41 montée mobile en translation sur la base 34 selon la direction Y (flèche F4). L'actionneur 10 comprend des moyens d'entraînement (non représentés) permettant de commander la position de la base 34 le long du rail 36, du lecteur 38 autour de l'axe V, et de la navette 41 par rapport à la base 34 selon la direction Y.

L'unité de commande 12 est reliée au dispositif de distribution 8 et à l'actionneur 10 en vue de leur commande.

L'unité de commande 12 comprend une mémoire de stockage d'instructions, par exemple sous la forme d'un programme d'ordinateur, et un microprocesseur adapté pour mettre en oeuvre le programme d'ordinateur.

Plusieurs glissières de guidage 42 sont fixées sur les zones 14, 16 de la table 4. Les glissières 42 sont parallèles entre elles, s'étendent selon la direction Y, et sont sensiblement régulièrement espacées.

Le support 6 comprend un châssis 44, et deux plateaux 46, 48, chacun destiné à recevoir un récipient de réaction.

Une plaque 50 de microtitrage, formant récipient de réaction, est portée par chacun des plateaux 46, 48.

Chaque plaque 50 est rectangulaire, et comprend quatre vingt seize cupules 52 adaptées pour recevoir des échantillons et des réactifs liquides, et agencées de façon matricielle en douze colonnes.

Chaque plaque 50 est munie, sur deux faces adjacentes (une seule étant visible) de sa tranche, de codes barre d'identification 53.

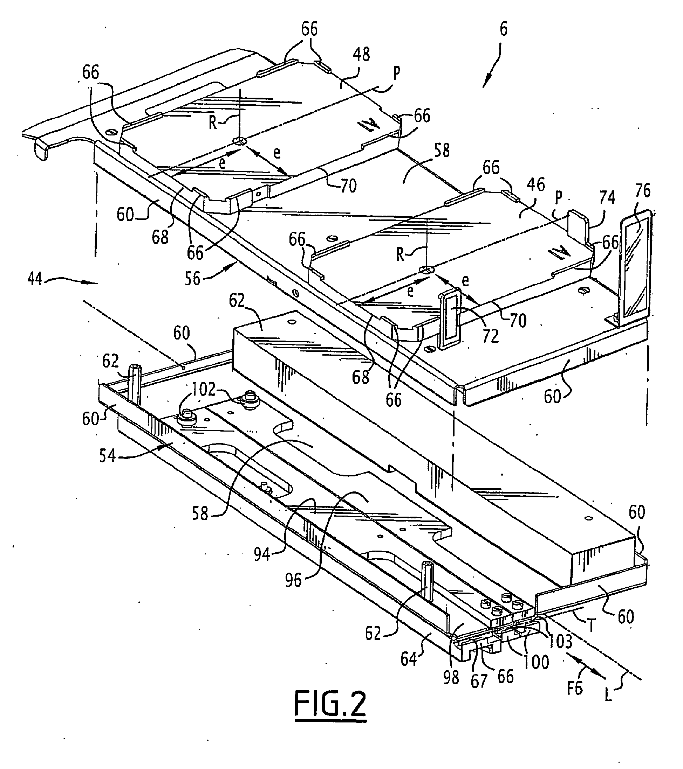

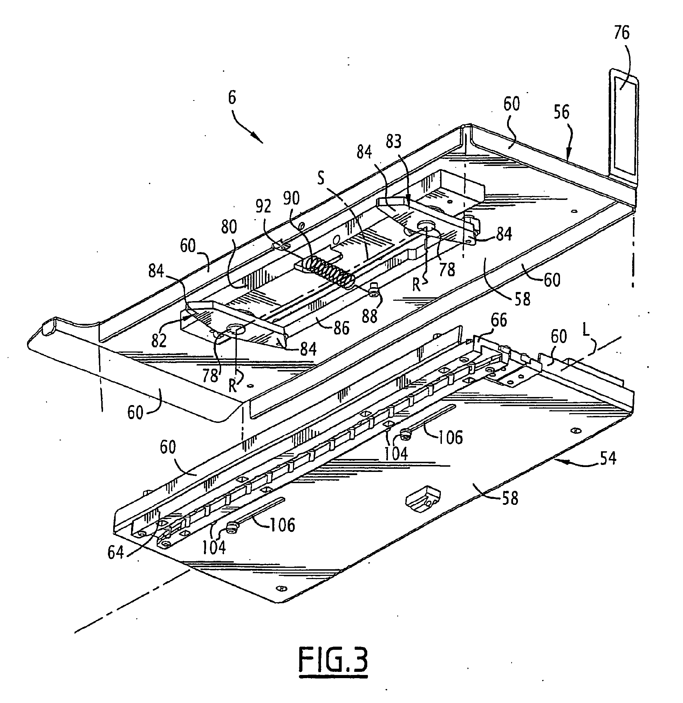

Tel que représenté sur les figures 2 et 3, où seul le support 6 est représenté, le châssis 44 présente une forme parallélépipédique rectangle allongée suivant une direction longitudinale L.

Le châssis 44 comprend une coque inférieure 54 et une coque supérieure 56 métalliques définissant entre elles un espace interne.

Chaque coque 54, 56 comprend une portion centrale 58 sensiblement plane munie de rebords périphériques 60 pliés en direction de l'autre coque 54, 56. Les rebords 60 définissent une tranche du châssis 44 lorsque les coques 54, 56 sont réunies.

Les coques 54, 56 sont fixées l'une sur l'autre par l'intermédiaire d'entretoises 62.

Un rail de montage 64 (figure 3) est fixé sous la coque inférieure 54 le long d'un bord longitudinal de la portion centrale 58. Le rail 64 est adapté pour être engagé avec une glissière 42 (figure 1).

Le rail 64 possède, à une extrémité, un crochet 66 en saillie d'un bord transversal de la portion centrale 58. Le crochet 66 comprend un encoche d'accouplement 67.

Les plateaux 46, 48 (figure 2) sont montés à rotation sur la coque supérieure, autour d'axes R parallèles entre eux, destinés à être sensiblement verticaux lorsque le support 6 est monté sur l'appareil d'analyse 2.

Chaque plateau 46, 48 est sensiblement rectangulaire et allongé suivant une direction P, et comprend des rebords périphériques 66 de centrage sur une face supérieure opposée au châssis 44. Les coins de chaque plateau 46, 48 sont biseautés.

L'axe R de chaque plateau 46, 48 est situé à équidistance e de deux bords adjacents 68, 70 du plateau 46 48, désignés par la suite « bords de référence ».

Le plateau 46 comprend, sur deux bords adjacents, des pattes 72, 74 portant des marques sous la forme de codes barres lisibles par le lecteur. Une patte 72 est fixée sur le grand bord de référence 70, et l'autre patte 74 est fixée sur un bord opposé au petit bord de référence 68.

Une marque visuelle « A1 », désignant la première cupule d'une plaque de microtitrage, est gravée sur un coin de chaque plateau 46, 48 pour aider un opérateur à positionner convenablement une plaque de microtitrage sur le plateau 46, 48.

Lorsqu'une plaque de microtitrage 50 (figure 1) est convenablement positionnée sur le plateau 46, 48, les codes d'identification 53 (figure 1) de la plaque 50 (figure 1) se situent au droit des bords de référence 68, 70 du plateau 46, 48.

La coque supérieure 56 est munie d'une patte 76 portant une marque d'identification, sous la forme d'une code barre lisible par le lecteur 38 (figure 1).

Comme cela est mieux visible sur la figure 3, chaque plateau 46, 48 est fixé à une extrémité d'un arbre 78 traversant la coque supérieure 56, et monté à rotation sur une barre de renfort 80 fixée sous la coque supérieure 56.

Le support 6 comprend un système de commande de la rotation des plateaux, situé à l'intérieur du châssis 44.

Le système de commande comprend un levier 82, 83 fixé sur chaque arbre 78, à l'extrémité de l'arbre 78 opposée au plateau 46, 48 (figure 2), à l'aide d'une vis de serrage. Le levier 82 s'étend sensiblement perpendiculairement à l'axe R de l'arbre 78 correspondant, et comprend deux branches 84 diamétralement opposées.

Les leviers 82, 83 s'étendent sensiblement parallèlement l'un à l'autre.

Les leviers 82, 83 sont reliés par une biellette 86 de renvoi articulée à chacune de ses extrémités sur une branche 84 d'un des leviers 82, 83, de façon que les leviers 82, 83 se déplacent en rotation de façon synchronisée. Le levier 83, désigné par la suite « levier mené », suit en fonctionnement le mouvement du levier 82, désigné par la suite « levier menant ».

La biellette 86 est munie sensiblement en son milieu d'un pion 88 de fixation. Un ressort élastique 90 de rappel est fixé à une extrémité sur le pion 88, et à une extrémité opposée à une attache 92 située du côté opposé au pion 98 par rapport à la ligne S passant par les axes R. L'attache 92 est venue de matière avec un rebord 60 longitudinal de la coque supérieure 56.

Comme cela est mieux visible sur la figure 2, le système de commande comprend deux tirettes de commande 94, 96 montées sur la coque inférieure 54, à l'intérieur du châssis 44.

Chaque tirette 94, 96 possède une forme allongée selon la direction L, et comprend une extrémité munie d'un crochet 100 et sortant à l'extérieur du châssis 44, par une découpe 98 ménagée dans un rebord 60 transversal de la coque inférieure 54 situé au droit du crochet 66. A son extrémité opposée, chaque tirette 94, 96 porte un galet 102.

Chaque crochet 100 possède une encoche d'accouplement 103.

Chaque tirette 94, 96 est montée coulissante selon la direction L sur la coque inférieure 54 (flèche F6). A cet effet, comme illustré sur la figure 3, chaque tirette 94, 96 porte des coulisseaux 104 glissant à l'intérieur de lumières allongées 106 ménagées dans la coque inférieure 54, seules les lumières 106 associées à la tirette 96 étant visibles sur la figure 3.

Chaque tirette 94, 96 est mobile, indépendamment de l'autre tirette, entre une position de repos (figures 2 et 3), dans laquelle la tirette 94, 96 est pour l'essentiel rentrée à l'intérieur du châssis 44, et seul son crochet 100 sort par la découpe 98, et une position active, dans laquelle la tirette 94, 96 est partiellement tirée à l'extérieure du châssis 44 selon la direction L. Chaque tirette 94, 96 est rappelée dans sa position de repos par un ressort non représenté.

Les tirettes 94, 96 sont disposées de façon que le galet 102 d'une tirette 94 se situe en regard d'une branche 84 du levier menant 82, selon la direction L, et que le galet 102 de l'autre tirette 96 se situe en regard de l'autre branche du levier menant 82, selon la direction L.

Les crochets 66, 100 du rail 64 et des tirettes 94, 96 sont sensiblement identiques, et, dans la position de repos des tirettes 94, 96, les encoches 67, 103 des crochets 66, 100 sont alignées suivant une direction transversale T perpendiculaire à la direction L et aux axes R. Ainsi, dans cette position des crochets 66, 100, le doigt 40 (figure 1) est insérable dans les encoches 67, 103, et déplaçable selon la direction T pour accoupler le doigt 40 sélectivement avec l'un des crochet 66, 100, ou dégager le doigt 40 des crochets 66, 100, et ainsi libérer le doigt 40.

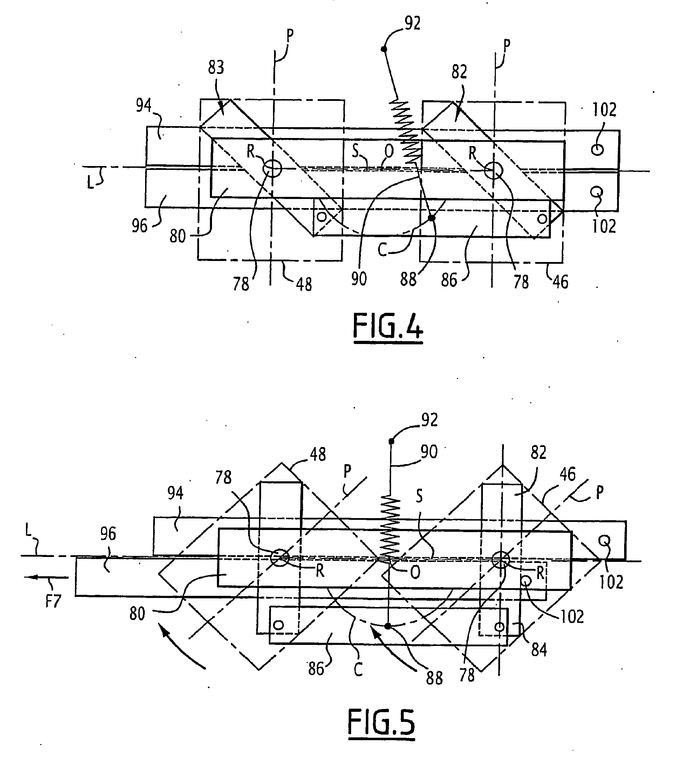

Le fonctionnement du support 6 est décrit ci-dessous en référence aux figures 4 à 6, où les plateaux 46, 48 sont représentés en pointillés pour des raisons de clarté.

Dans une première position (figure 4), les plateaux 46, 48 sont dans une première position dans laquelle leurs directions P sont perpendiculaires à la direction L, et les leviers 82, 83 s'étendent obliquement sensiblement à 45° par rapport la direction L.

Comme illustré sur la figure 5, le déplacement de la tirette 96 suivant la flèche F7 amène le galet 102 associé en appui sur la branche 84 en regard du levier menant 82, et le galet 102 entraîne le levier 82, et par conséquent le plateau en rotation autour de l'axe R correspondant.

Les leviers 82, 83 étant liés par la biellette 86, le levier 83 mené et le plateau 48 correspondant pivotent simultanément autour de l'axe R correspondant.

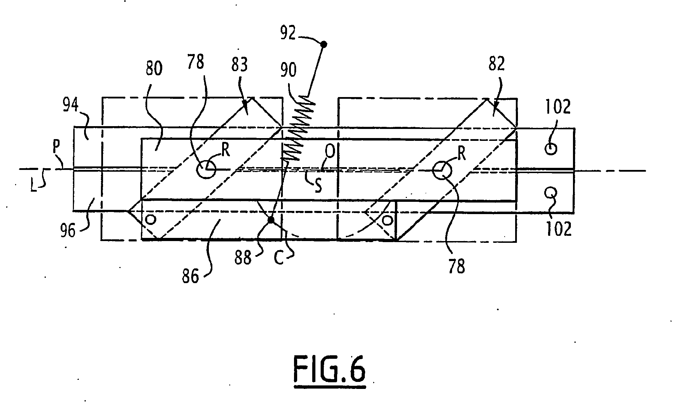

Le déplacement de la tirette 96 est poursuivi jusqu'à atteindre une deuxième position (figure 6), dans laquelle les leviers 82, 83 et les plateaux 46, 48 ont pivoté de 90° par rapport à la première position. Dans cette deuxième position, les directions P des plateaux sont parallèles à la direction L.

La tirette 96 est rappelée en position de repos (figure 6).

Une nouvelle action sur la même tirette 96 n'entraîne pas de mouvement des plateaux 46, 48.

Le déplacement de l'autre tirette 94 entraîne, de façon analogue, la rotation des plateaux 46, 48, en sens inverse, de la deuxième position (figure 6) vers la première position (figure 4).

Lors des mouvements entre la première position et la deuxième position, le pion 88 se déplace le long d'un arc de cercle C déterminé, centrée sur un point géométrique O situé sur la ligne S. L'attache 92 est placée de façon que, lors du déplacement des plateaux 46, 48 d'une position vers l'autre, la distance entre le pion 88 et l'attache 92 croît puis décroît en passant par un maximum (figure 5) correspondant à une position intermédiaire médiane entre les première et deuxième positions des plateaux 46,48.

Ainsi, lorsque les plateaux 46, 48 se situent entre la première position (figure 4) et la position médiane (figure 5), le ressort 90 rappelle les plateaux 46, 48 vers la première position (figure 4), et lorsque les plateaux 46, 48 se situent entre la deuxième position (figure 6) et la position médiane (figure 5), le ressort 90 rappelle les plateaux 46, 48 vers la deuxième position (figure 6). De cette façon, les plateaux 46, 48 sont ramenés dans l'une ou l'autre des première et deuxième positions, et ne s'immobilisent pas entre ces positions.

Dans chacune des première et deuxième positions, la biellette 86 est en appui sur une face longitudinale de la barre 80, et empêche une rotation des leviers 82, 83 et donc des plateaux 46, 48 au-delà des première et deuxième positions.

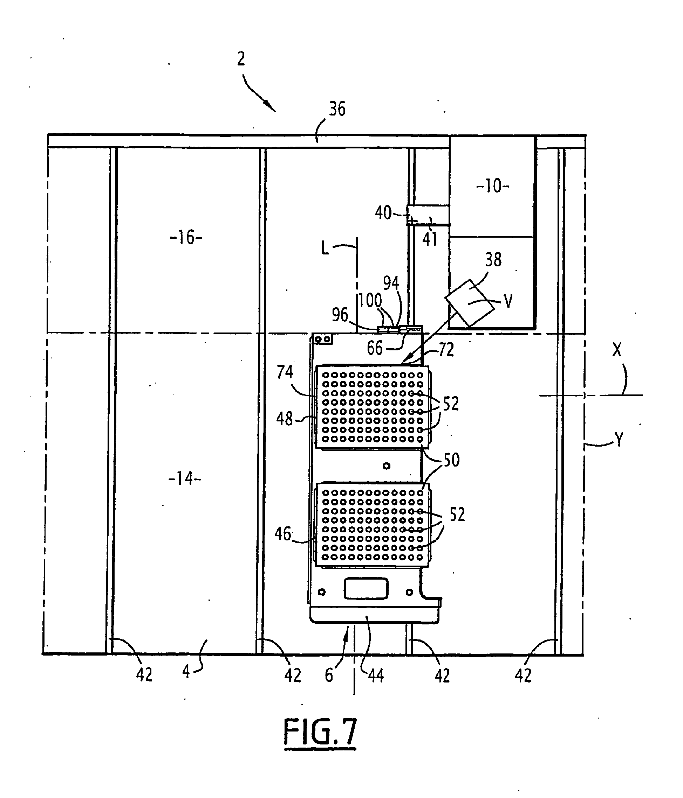

Le fonctionnement de l'appareil d'analyse 2 va maintenant être décrit en référence aux figures 7 à 10.

Comme illustré sur la figure 7, le support 6 est positionné sur la table 4 en engageant son rail 64 (non visible) sur une glissière 42 de la table 4. La direction L est donc alignée avec la direction Y, et la direction T (figures 2 et 3) est alignée avec la direction X.

Les plateaux 46, 48 sont dans la première position.

Les cupules 52 des plaques 50 sont remplies d'échantillons à analyser, par exemple du sang.

L'unité de commande 12 (figure 1) met en oeuvre le procédé d'analyse en exécutant le programme d'analyse, en fonction de données rentrées préalablement dans l'unité de commande.

Ces données comprennent par exemple, de façon non limitative, l'emplacement des récipients de réactifs 18 (figure 1), le code d'identification du support 6, les codes d'identification des plaques 50, et les mélanges à effectuer dans chaque cupule 52 de chaque plaque 50.

Dans une première étape, la position adéquate des plateaux 46, 48 est vérifiée.

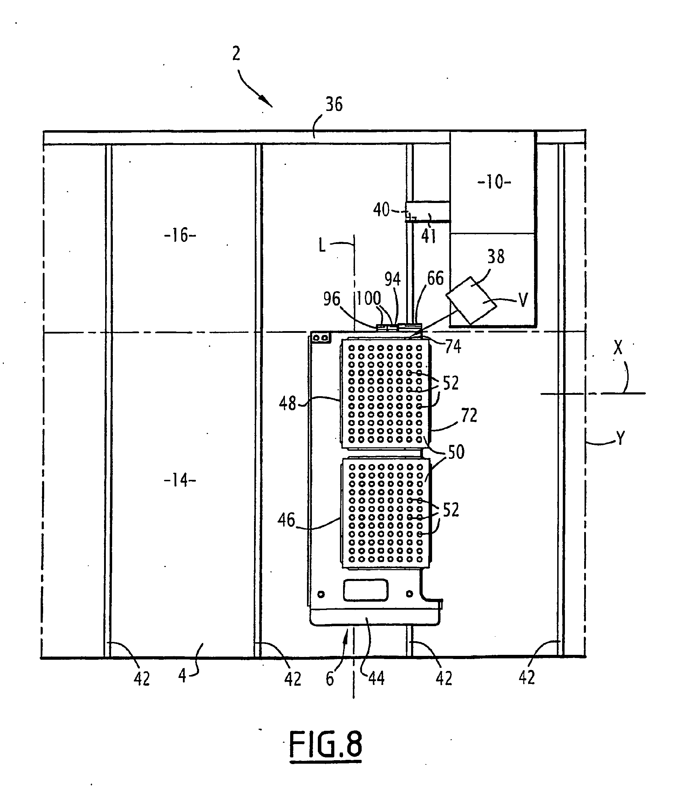

Pour ce faire, l'actionneur 10 se déplace selon la direction X, le long du rail 36, pour s'approcher du support 6. L'actionneur 10 déplace son doigt selon la direction X pour l'aligner avec les crochets 66, 100 suivant la direction X, puis se déplace suivant la direction X pour mettre le doigt en prise avec le crochet 100 de la tirette 96. Ensuite, l'actionneur 10 déplace son doigt 40 selon la direction Y pour actionner la tirette 96, provoquant ainsi la rotation des plateaux 46, 48 vers la deuxième position (figure 8), et relâche la tirette 96 vers sa position de repos. Ensuite, l'actionneur 10 se déplace selon la direction X pour amener son doigt 40 en prise avec le crochet de la tirette 94, puis actionne et relâche la tirette 94 à l'aide du doigt 40, provoquant le retour des plateaux dans la première position (figure 7). Ainsi, même en cas de mauvais positionnement initial des plateaux 46, 48, ceux-ci sont ramenés dans la première position.

Dans une deuxième étape, l'actionneur 10 oriente le lecteur 38 en direction de la patte 72 afin de détecter sa présence ou non. Si la patte 72 est bien détectée, cela signifie que les plateaux 46, 48 sont convenablement orientés. Sinon, l'actionneur 10 retourne à la première étape. Un nouvel échec signifie la présence d'une anomalie et a pour conséquence l'arrêt du procédé. La lecture est effectuée à une distance importante, et sous un angle d'incidence important, ce qui nuit à la précision de lecture. Néanmoins, la précision de lecture est suffisante pour la détection de l'orientation des plateaux 46, 48.

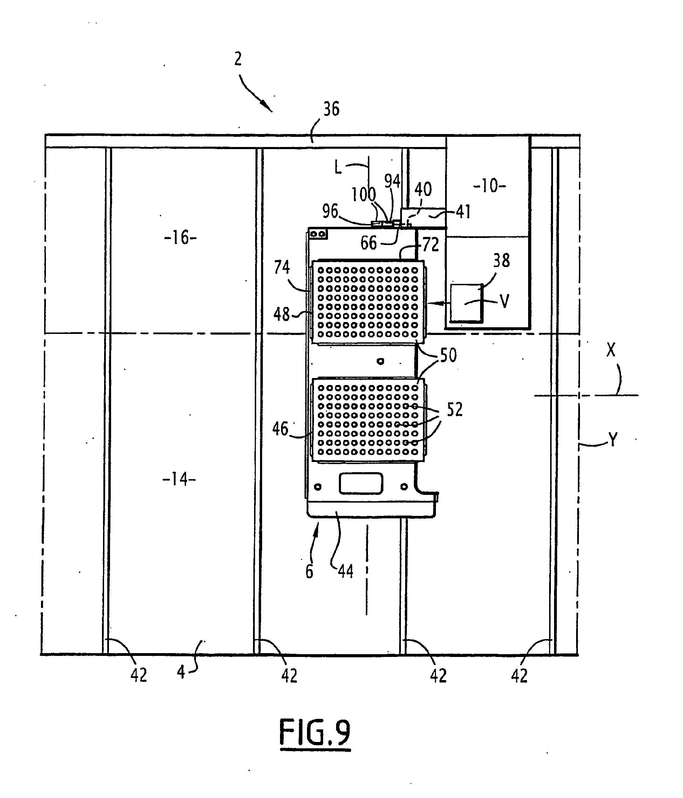

Dans une troisième étape, l'actionneur tire le support 6 dans la zone 16, à l'aide de son doigt 40 accrochant le crochet 66, de façon à amener les codes d'identification des plaques 50 en regard du lecteur pour lire ces codes et identifier les plaques 50 (figure 9).

La lecture s'effectue à la distance et sous l'incidence requise. La lecture est donc précise et fiable, de façon à assurer une identification correcte des plaques 50. Ceci est important, dans la mesure où les échantillons ne doivent pas être confondus. En cas d'absence de code ou en présence d'autres anomalies, le procédé est interrompu.

Le support 6 est ramené dans la zone 14 par l'actionneur 10

Dans une quatrième étape, le dispositif de distribution 8 (figure 1) prélève des réactifs dans les récipients de réactifs 18 (figure 1), à l'aide des pipettes 30 (figure 1), et rempli les cupules 52 des plaque 50 à l'aide de ces réactifs.

Les pipettes étant alignées selon la direction Y, sur chaque plaque 50, quatre cupules 52 d'une même colonne sont remplies simultanément.

Ces opérations sont effectuées jusqu'à ce que toutes les cupules 52 soient remplies.

Dans une cinquième étape, l'actionneur 10 actionne, à l'aide de son doigt 40, la tirette 96 pour faire pivoter les plateaux 46, 48 vers leur deuxième position (figure 8).

Dans une sixième étape, similaire à la deuxième étape, l'actionneur 10 oriente son lecteur 38 et valide l'orientation convenable des plateaux 46, 48 par la lecture de la patte 74 (figure 8).

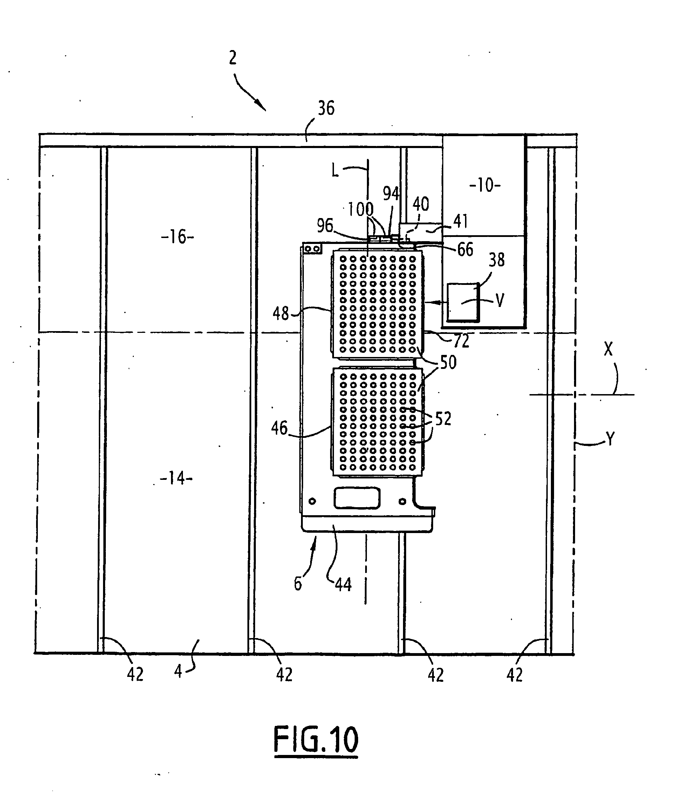

Dans une septième étape, similaire à la troisième étape, l'actionneur 10 tire le support 16 dans la zone 16, à l'aide de son doigt 40 accrochant le crochet 66 du rail 64, de façon à amener les codes d'identification des plaques 50 en regard du lecteur 38 pour lire ces codes et identifier les plaques 50 (figure 10).

Les bords de référence 68, 70 d'un plateau 46, 48 étant équidistants de l'axe de rotation R du plateau 46, 48, les bords de référence 68, 70 se situent dans le même plan de lecture dans les première et deuxième positions du plateau, respectivement. Il en résulte que les conditions de lecture requises sont remplies, comme dans la troisième étape.

Si la troisième étape a été validée, mais que la septième ne l'est pas, par exemple, en cas d'absence de code, cela peut signifier qu'une plaque 50 est mal orientée sur un plateau 46, 48. Dans ce cas, l'analyse doit être interrompue.

En variante, des étapes analogues aux étapes cinq à sept peuvent être effectuées avant la quatrième étape, pour détecter au plus tôt une mauvaise orientation de la plaque sur son plateau, et éviter un remplissage erroné des cupules 52.

La septième étape est une étape de vérification supplémentaire optionnelle. En variante, la septième étape n'est pas effectuée.

Dans une huitième étape, le dispositif de distribution prélève des réactifs dans les récipients de réactifs 18 (figure 1), à l'aide des pipettes (figure 1), et rempli les cupules 52 à l'aide de ces réactifs.

Avec l'orientation des plaques 50 dans la deuxième position des plateaux, sur chaque plaque 50, quatre cupules 52 d'une même ligne sont remplies simultanément.

Ces opérations sont effectuées jusqu'à ce que toutes les cupules 52 soient remplies.

Ainsi, l'actionneur de lecture 10 de l'appareil d'analyse 2 est avantageusement utilisé pour actionner les tirettes 94, 96 du support 6, et se faisant commander le pivotement des plateaux 46, 48. Le pivotement des plateaux permet un remplissage matriciel rapide des cupules 52.

Le support 6 est simple et fiable, et permet la mise en oeuvre d'un procédé d'analyse de façon sûre et répétable.

Ce procédé est un exemple de procédé possible. En variante, le remplissage des cupules 52 est effectué d'abord ligne par ligne et ensuite colonne par colonne.

En variante, la tête de distribution 20 est munie d'un doigt d'actionnement apte à venir en prise avec les crochets 100, de façon que les tirettes 94, 96 puissent être actionnées à l'aide de la tête de distribution 20.

L'invention s'applique au support de plaque de microtitrage, et de façon générale au support de récipients de réaction comprenant des cupules ou éprouvettes réparties dans un plan horizontal, par exemple en matrice.

## Revendications

1. Support de récipients de réaction, du type comprenant un châssis (44) destiné à être monté dans un appareil d'analyse (2) et au moins un plateau de support (46, 48) destiné à recevoir un ou plusieurs récipients de réaction (50), le plateau de support (46, 48) étant monté rotatif sur le châssis (44) autour d'un axe de rotation (R), **caractérisé en ce qu'**il comprend au moins un organe de commande (94, 96) monté mobile sur le châssis et comprenant des moyens d'accouplement libérable (100) avec un élément mobile d'actionnement (40) d'un actionneur (10) de l'appareil d'analyse (2) déplaçable pour mettre en prise l'élément mobile d'actionnement avec l'organe de commande ou le dégager de l'organe de commande, de façon à permettre le déplacement de l'organe de commande (94, 96) à l'aide de l'actionneur (10), l'organe de commande (94, 96) et le plateau de support (46, 48) étant reliés entre eux par l'intermédiaire d'éléments mécaniques de transmission (102, 82, 83), de façon qu'un déplacement de l'organe de commande (94, 96) par l'actionneur (10) est susceptible de provoquer une rotation du plateau de support (46, 84) autour de l'axe de rotation (R) dans au moins un sens de rotation.

2. Support selon la revendication 1, **caractérisé en ce que** les éléments mécaniques de transmission (102, 82, 83) sont logés à l'intérieur du châssis (44).

3. Support selon l'une des revendications 1 et 2, **caractérisé en ce que** le plateau de support (44, 48) est mobile entre deux positions extrêmes décalées de 90°.

4. Support selon la revendication 3, **caractérisé en ce qu'**il comprend des éléments de rappel (86, 88, 90, 92) adaptés pour rappeler le plateau de support (46, 48) vers une première position extrême lorsque le plateau de support (46, 48) se situe entre la première position extrême et une position intermédiaire déterminée entre les deux positions extrêmes, et rappeler le plateau de support (46, 48) vers la deuxième position extrême lorsque le plateau de support se situe entre la deuxième position extrême et la position intermédiaire.

5. Support selon la revendication 4, **caractérisé en ce que** les éléments de rappel comprennent une pièce (86) liée en déplacement au plateau de support (46, 48), et un organe élastique de rappel (90) s'étendant entre la pièce (86) et une attache (92) fixe du châssis (44), la pièce (80) possédant une trajectoire passant par une position extrémale d'éloignement par rapport à l'attache (92) lorsque le plateau de support (46, 48) est dans la position intermédiaire.

6. Support selon l'une quelconque des revendications précédentes, **caractérisé en ce que** le ou chaque organe de commande (94, 96) est monté coulissant sur le châssis (44).

7. Support selon la revendication 6, caractérisé et en ce que les éléments de transmission comprennent un galet (102) et un levier, l'un étant lié au ou à chaque organe de commande (94, 96), et l'autre étant lié au plateau de support (46, 48).

8. Support selon l'une quelconque des revendications précédentes, **caractérisé en ce qu'**il comprend un organe de commande (94) permettant de déplacer le plateau de support (46, 48) dans un sens de rotation, et un autre organe de commande (96) permettant de déplacer le plateau de support (46, 48) dans le sens de rotation opposé, les moyens d'accouplement libérable (100) des organes de commandes (94, 96) étant adaptés pour être sélectivement mis en prise avec l'élément mobile d'actionnement (40) d'un actionneur (10) de l'appareil d'analyse.

9. Support selon l'une quelconque des revendications précédentes, **caractérisé en ce que** le plateau de support (46, 48) comprend des éléments d'identification (72, 74) permettant d'identifier l'orientation du plateau de support (46, 48) autour de son axe de rotation (R).

10. Appareil d'analyse (2) comprenant une table (4), un dispositif de distribution (8) comprenant une tête de distribution (20) mobile par rapport à la table (4) et possédant une pluralité de pipettes (20) alignées adaptées pour aspirer, retenir et/ou éjecter du liquide, **caractérisé en ce qu'**il comprend au moins un support (6) de plaque de récipient de réaction selon l'une quelconque des revendications précédentes, le châssis (44) étant adapté pour être monté sur la table (4) de façon à permettre le remplissage d'un récipient de réaction (50) porté par le support (6), et au moins un actionneur (10) comprenant un élément mobile d'actionnement (40) apte à être mis en prise avec les moyens d'accouplement libérable (100) du ou de chaque organe de commande (94, 96) du support (6).

11. Appareil selon la revendication 10, **caractérisé en ce que** l'actionneur (10) et le support (6) comprennent des moyens d'accouplement libérable pour déplacer le support (6) par rapport à la table (4).

12. Appareil selon la revendication 10 ou 11, **caractérisé en ce que** l'actionneur (10) comprend des moyens de lecture (38) de codes d'identification disposés sur un récipient de réaction.

13. Appareil selon la revendication 12, dépendante de la revendication 8, **caractérisé en ce que** les éléments d'identification (72, 74) du plateau de support (46, 48) sont du même type que les codes d'identification de récipients de réaction destinés à être disposés sur le support (6).

14. Procédé d'analyse d'échantillons répartis dans des cupules d'un récipient d'analyse porté par un support (6) selon l'une quelconque des revendications 1 à 9, à l'aide d'un appareil selon l'une quelconque des revendications 12 à 13, comprenant les étapes de :
- commander l'actionneur de façon qu'il agisse sur le ou un organe de commande (94, 96) du support (6) pour placer le plateau de support (46, 48) dans une première position ;
- remplir les cupules à l'aide du dispositif de distribution (8) ;
- commander l'actionneur (10) de façon qu'il agisse sur le ou un organe de commande (94, 96) du support pour placer le plateau de support (46, 48) dans une deuxième position en le faisant pivoter de sensiblement 90° autour de l'axe de rotation (R) du support (6) ; et
- remplir les cupules à l'aide du dispositif de distribution (8).

15. Produit programme d'ordinateur enregistrable sur un support de données numériques ou dans un ordinateur, comprenant des étapes logicielles permettant la mise en oeuvre du procédé selon la revendication 14 lorsqu'il est mis en oeuvre dans un ordinateur.

## Claims

1. Reaction vessel support of the type comprising a chassis (44) designed to be mounted in an analyzing device (2) and at least one supporting plate (46, 48) designed to take one or more reaction vessels (50), the supporting plate (46, 48) being mounted rotatably on the chassis (44) about an axis of rotation (R), said support being **characterized in that** it comprises at least one control member (94, 96) mounted movably on the chassis and comprising releasable means (100) of coupling to a movable actuating element (40) of an actuator (10) of the analyzing device (2) that can be moved to cause the movable actuating element to engage with the control member or disengage it from the control member, in such a way as to enable the control member (94, 96) to be moved by the actuator (10), with the control member (94, 96) and the supporting plate (46, 48) being connected together by mechanical drive elements (102, 82, 83), in such a way that a movement of the control member (94, 96) by the actuator (10) is able to bring about a rotation of the supporting plate (46, 84) about the axis of rotation (R) in at least one direction of rotation.

2. Support according to Claim 1, **characterized in that** the mechanical drive elements (102, 82, 83) are housed inside the chassis (44).

3. Support according to one of Claims 1 and 2, **characterized in that** the supporting plate (44, 48) is movable between two extreme positions forming an angle of 90° to each other.

4. Support according to Claim 3, **characterized in that** it comprises return elements (86, 88, 90, 92) designed to return the supporting plate (46, 48) to a first extreme position when the supporting plate (46, 48) is between the first extreme position and a particular intermediate position between the two extreme positions, and to return the supporting plate (46, 48) to the second extreme position when the supporting plate is between the second extreme position and the intermediate position.

5. Support according to Claim 4, **characterized in that** the return elements comprise a component (86) linked in movement to the supporting plate (46, 48), and an elastic return member (90) extending between the component (86) and a fixed attachment (92) on the chassis (44), the component (80) possessing a trajectory which passes through a position of greatest distance from the attachment (92) when the supporting plate (46, 48) is in the intermediate position.

6. Support according to any one of the preceding claims, **characterized in that** the control member or each control member (94, 96) is mounted on and slides in the chassis (44).

7. Support according to Claim 6, characterized and in that the drive elements comprise a roller (102) and a lever, one being connected to the control member or to each control member (94, 96), and the other being connected to the supporting plate (46, 48).

8. Support according to any one of the preceding claims, **characterized in that** it comprises a control member (94) for moving the supporting plate (46, 48) in one direction of rotation, and another control member (96) for moving the supporting plate (46, 48) in the opposite direction of rotation, the releasable means (100) of coupling the control members (94, 96) being designed to be selectively engaged by the movable actuating element (40) of an actuator (10) belonging to the analyzing device.

9. Support according to any one of the preceding claims, **characterized in that** the supporting plate (46, 48) comprises means of identification (72, 74) enabling the orientation of the supporting plate (46, 48) about its axis of rotation (R) to be identified.

10. Analyzing device (2) comprising a table (4) and a dispensing unit (8), the latter comprising a dispensing head (20) that is movable relative to the table (4) and possesses a row of pipettes (20) designed to draw up, retain and/or eject liquid, said device being **characterized in that** it comprises at least one reaction vessel tray support (6) according to any one of the preceding claims, the chassis (44) being designed to be mounted on the table (4) in such a way as to allow a reaction vessel (50) carried by the support (6) to be filled, and at least one actuator (10) comprising a movable actuating element (40) designed to be engaged with the releasable coupling means (100) of the control member or each control member (94, 96) of the support (6).

11. Device according to Claim 10, **characterized in that** the actuator (10) and the support (6) comprise releasable coupling means for moving the support (6) relative to the table (4).

12. Device according to Claim 10 or 11, **characterized in that** the actuator (10) comprises means (38) for reading identification codes on a reaction vessel.

13. Device according to Claim 12, as dependent on Claim 8, **characterized in that** the means of identification (72, 74) of the supporting plate (46, 48) are of the same type as the identification codes of the reaction vessels designed to be placed on the support (6).

14. Method of analyzing samples distributed in wells in an analysis vessel carried by a support (6) according to any one of Claims 1-9, using a device according to any one of Claims 12-13, comprising the following steps:
- controlling the actuator to act on the control member or a control member (94, 96) of the support (6) in order to place the supporting plate (46, 48) in a first position;
- using the dispensing unit (8) to fill the wells;
- controlling the actuator (10) to act on the control member or a control member (94, 96) of the support in order to place the supporting plate (46, 48) in a second position by pivoting it through an angle of approximately 90° about the axis of rotation (R) of the support (6); and
- using the dispensing unit (8) to fill the wells.

15. Computer program product recordable on a digital data medium or in a computer, comprising software steps for executing the method according to Claim 14 when it is executed in a computer.

## Patentansprüche

1. Halterung für Reaktionsgefäße des Typs, der aufweist:
einen Rahmen (44), der vorgesehen ist, um in einer Analysevorrichtung (2) montiert zu sein, und mindestens eine Halteplatte (46, 48), die vorgesehen ist, um ein oder mehr Reaktionsgefäße (50) aufzunehmen, wobei die Halteplatte (46, 48) an dem Rahmen (44) um eine Rotationsachse (R) drehbar montiert ist, **dadurch gekennzeichnet, dass** sie aufweist:
mindestens ein Steuermittel (94, 96), das bewegbar an dem Rahmen montiert ist und Mittel zum lösbaren Kuppeln (100) mit einem bewegbaren Betätigungselement (40) eines Stellglieds (10) der Analysevorrichtung (2) aufweist, das verlagerbar ist, um das bewegbare Betätigungselement mit dem Steuermittel in Eingriff zu bringen oder dieses von dem Steuermittel zu lösen, um das Verlagern des Steuermittels (94, 96) mit Hilfe des Stellglieds (10) zu ermöglichen, wobei das Steuermittel (94, 94) und die Halteplatte (46, 48) mittels mechanischer Übertragungselemente (102, 82, 83) miteinander verbunden sind, so dass ein Verlagern des Steuermittels (94, 96) mittels des Stellglieds (10) in der Lage ist, ein Drehen der Halteplatte (46, 84) um die Rotationsachse (R) in mindestens einer Drehrichtung zu bewirken.

2. Halterung gemäß Anspruch 1, **dadurch gekennzeichnet, dass** die mechanischen Übertragungselemente (102, 82, 83) im Inneren des Rahmens (44) aufgenommen sind.

3. Halterung gemäß einem der Ansprüche 1 und 2, **dadurch gekennzeichnet, dass** die Halteplatte (44, 48) zwischen zwei um 90° versetzten Außenpositionen bewegbar ist.

4. Halterung gemäß Anspruch 3, **dadurch gekennzeichnet, dass** sie Rückholelemente (86, 88, 90, 92) aufweist, die angepasst sind, um die Halteplatte (46, 48) in eine erste Außenposition zurückzuholen, wenn die Halteplatte (46, 48) zwischen der ersten Außenposition und einer bestimmten Zwischenposition zwischen den beiden Außenpositionen angeordnet ist, und um die Halteplatte (46, 48) in die zweite Außenposition zurückzuholen, wenn die Halteplatte zwischen der zweiten Außenposition und der Zwischenposition angeordnet ist.

5. Halterung gemäß Anspruch 4, **dadurch gekennzeichnet, dass** die Rückholelemente aufweisen: einen Teil (86), der in Bewegung mit der Halteplatte (46, 48) verbunden ist, und ein elastisches Rückholelement (90), das sich zwischen dem Teil (86) und einem ortsfesten Befestigungsstück (92) des Rahmens (44) erstreckt, wobei der Teil (80) eine Bewegungsbahn hat, die bezüglich des Befestigungsstücks (92) durch eine äußerste Entfernungsposition hindurchverläuft, wenn die Halteplatte (46, 48) in der Zwischenposition ist.

6. Halterung gemäß irgendeinem der vorhergehenden Ansprüche, **dadurch gekennzeichnet, dass** das oder jedes Steuermittel (94, 96) gleitend an dem Rahmen (44) montiert ist.

7. Halterung gemäß Anspruch 6, **dadurch gekennzeichnet, dass** die Übertragungselemente eine Rolle (102) und einen Hebel aufweisen, wobei das eine davon mit dem oder jedem Steuermittel (94, 96) verbunden ist und das andere mit der Halteplatte (46, 48) verbunden ist.

8. Halterung gemäß irgendeinem der vorhergehenden Ansprüche, **dadurch gekennzeichnet, dass** sie aufweist: ein Steuermittel (94), das ein Verlagern der Halteplatte (46, 48) in einer Drehrichtung ermöglicht, und ein anderes Steuermittel (96), das ein Verlagern der Halteplatte (46, 48) in der entgegengesetzten Drehrichtung ermöglicht, wobei die Mittel zum lösbaren Kuppeln (100) der Steuermittel (94, 96) angepasst sind, um wahlweise mit dem bewegbaren Betätigungselement (40) eines Stellglieds (10) der Analysevorrichtung in Eingriff zu gelangen.

9. Halterung gemäß irgendeinem der vorhergehenden Ansprüche, **dadurch gekennzeichnet, dass** die Halteplatte (46, 48) Identifikationselemente (72, 74) aufweist, die ein Identifizieren der Ausrichtung der Halteplatte (46, 48) um ihre Rotationsachse (R) ermöglichen.

10. Analysevorrichtung (2), aufweisend einen Tisch (4), eine Ausgabevorrichtung (8), die einen Ausgabekopf (20) aufweist, der bezüglich des Tisches (4) bewegbar ist und eine Mehrzahl von ausgerichteten Pipetten (20) aufweist, die angepasst sind, um Flüssigkeit anzusaugen, zu halten und/oder auszustoßen, **dadurch gekennzeichnet, dass** sie mindestens eine Halterung (6) einer Reaktionsgefäßplatte gemäß irgendeinem der vorhergehenden Ansprüche aufweist, wobei der Rahmen (44) angepasst ist, um an dem Tisch (4) montiert zu sein, um das Füllen eines durch die Halterung (6) gehaltenen Reaktionsgefäßes (50) zu ermöglichen, und mindestens ein Stellglied (10) ein bewegbares Betätigungselement (40) aufweist, das vorgesehen ist, um mit den Mitteln zum lösbaren Kuppeln (100) des oder jedes Steuermittels (94, 96) der Halterung (6) in Eingriff zu gelangen.

11. Vorrichtung gemäß Anspruch 10, **dadurch gekennzeichnet, dass** das Stellglied (10) und die Halterung (6) Mittel zum lösbaren Kuppeln aufweisen, um die Halterung (6) bezüglich des Tisches (4) zu verlagern.

12. Vorrichtung gemäß Anspruch 10 oder 11, **dadurch gekennzeichnet, dass** das Stellglied (10) Mittel zum Auslesen (38) von Identifikationscodes aufweist, die an einem Reaktionsgefäß vorgesehen sind.

13. Vorrichtung gemäß Anspruch 12 in Abhängigkeit von Anspruch 8, **dadurch gekennzeichnet, dass** die Identifikationselemente (72, 74) der Halteplatte (46, 48) vom gleichen Typ wie die Reaktionsgefäß-Identifikationscodes sind, die vorgesehen sind, um an der Halterung (6) angeordnet zu sein.

14. Verfahren zum Analysieren von Proben, die in Behältern eines Analysegefäßes verteilt sind, das von einer Halterung (6) gemäß irgendeinem der Ansprüche 1 bis 9 gehalten wird, mit Hilfe einer Vorrichtung gemäß irgendeinem der Ansprüche 12 bis 13, die folgenden Schritte aufweisend:
- Steuern des Stellglieds derart, dass es auf das oder ein Steuermittel (94, 96) der Halterung (6) einwirkt, um die Halteplatte (46, 48) in einer ersten Position zu platzieren,
- Füllen der Behälter mit Hilfe der Ausgabevorrichtung (8),
- Steuern des Stellglieds (10) derart, dass es auf das oder ein Steuermittel (94, 96) der Halterung einwirkt, um die Halteplatte (46, 48) in einer zweiten Position zu platzieren, wobei sie im Wesentlichen um 90° um die Rotationsachse (R) der Halterung (6) gedreht wird, und
- Füllen der Behälter mit Hilfe der Ausgabevorrichtung (8).

15. Computerprogrammprodukt, das auf einem Digitaldatenträger oder in einem Computer speicherbar ist, aufweisend Softwareschritte, die das Durchführen des Verfahrens gemäß Anspruch 14 ermöglichen, wenn es in einem Computer durchgeführt wird.
